# EUROPEAN PATENT SPECIFICATION

(11) **EP 3 437 839 B1**
(45) Date of publication and mention of the grant of the patent: **27.09.2023**
(21) Application number: 17184929.2
(22) Date of filing: 04.08.2017
(51) Int. Cl.: B29C 64/153, B29C 64/393, B22F 10/28, B22F 10/36, B22F 12/90

(54) **APPARATUS FOR MANUFACTURING THREE-DIMENSIONAL OBJECTS**
VORRICHTUNG ZUR HERSTELLUNG DREIDIMENSIONALER OBJEKTE
APPAREIL DE FABRICATION D'OBJETS TRIDIMENSIONNELS

(43) Date of publication of application: 06.02.2019
(73) Proprietor: Concept Laser GmbH, 96215 Lichtenfels (DE)
(72) Inventor: BECHMANN, Florian, 96215 Lichtenfels (DE); BOKKES, Tobias, 96253 Untersiemau (DE); SCHUMANN, Philipp, 96274 Itzgrund - Schottenstein (DE); WERNER Jürgen, 96215 Lichtenfels (DE); EBERT, Marie-Christin, 96450 Coburg (DE); POPP, Alexandra, 96231 Bad Staffelstein (DE)
(74) Representative: Hafner & Kohl PartmbB

(56) References cited:
- EP-A1- 2 942 130
- WO-A1-2015/112726
- DE-A1-102015 007 790
- TAHERI ANDANI MOHSEN ET AL: "Spatter formation in selective laser melting process using multi-laser technology", MATERIALS & DESIGN, vol. 131, 22 June 2017 (2017-06-22), pages 460-469, XP085148904, ISSN: 0264-1275, DOI: 10.1016/J.MATDES.2017.06.040

## Description

The invention relates to an apparatus for additively manufacturing of three-dimensional objects by means of successive layerwise selective irradiation and consolidation of layers of a build material which can be consolidated by means of an energy beam.

Such apparatuses are well-known from prior art, in which an energy beam is provided to selectively irradiate and thereby consolidate layers of a build material in a build plane. By successively irradiating layers of a build material an object is additively manufactured. To consolidate the build material energy is depleted in a consolidation zone via the energy beam. Dependent on various parameters, such as the energy beam power or the energy beam intensity the (powdery) build material in the consolidation zone can be sintered or melted and thereby consolidated. DE10 2015 007790 A1 discloses an apparatus for additively manufacturing of three-dimensional objects by means of successive layerwise selective irradiation and consolidation of layers of a build material which can be consolidated by means of an energy beam, comprising a detection device configured to detect splash particles generated by at least partially evaporating build material in a consolidation zone in which the energy beam irradiates the build material.

Tahari Andani Mohsen et al., "Spatter formation in selective laser melting process using multi-laser technology", vol. 131, 22 June 2017 (2017-06-22), pages 460-469 discloses an apparatus for additive manufacturing according to the preamble of the appended claim 1.

It is further known from prior art that the amount of energy depleted in the build material is crucial for process quality and object quality, since if the energy depleted in the build material falls short or exceeds a defined interval or value, deviations or negative impacts on the object to be built can be the result. In particular, an exceed of energy depleted in the build material may lead to a partial evaporation of the build material, wherein splash particles are generated and distributed in and around the consolidation zone compromising the process and object quality, i.e. contaminating the powder bed around the zone the build material has been evaporated in.

Therefore, it is an object to provide an apparatus and a method for operating said apparatus, wherein the generation of information relating to the generation of splash particles is improved.

The object is inventively achieved by an apparatus according to claim 1 and a method according to claim 9 for operating said apparatus according to claim 1.

Advantageous embodiments of the invention are subject to the dependent claims.

The apparatus described herein is an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The apparatus comprises a number of functional units which are used during its operation. Exemplary functional units are a process chamber, an irradiation device which is configured to selectively irradiate a build material layer disposed in the process chamber with at least one energy beam, and a stream generating device which is configured to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea to provide a detection device that is configured to detect splash particles, e.g. generated by at least partially evaporating build material, in a consolidation zone in which the energy beam irradiates the build material. Hence, the detection device is configured to monitor at least the consolidation zone, i.e. the zone in which the energy beam irradiates the build material, wherein splash particles can be detected. Splash particles generated in the manufacturing process can therefore, be detected by means of the detection device. Splash particles as referred to in the scope of this application are typically conglomerates of build material particles and/or residues generated in the manufacturing process accelerated from a volume of build material during the manufacturing process. The splash particles are generated due to a depletion of energy in a layer of build material, wherein conglomerates of build material particles are thrown out of the volume of build material. For example, a volume of build material in which energy is depleted, e.g. via a laser beam, locally heats up, i.e. in the consolidation zone, in that build material partially evaporates. Due to the partial evaporation of build material splash particles are generated and accelerated in an essentially arbitrary manner.

The (local) entirety of generated splash particles forms a splash pattern, for example leading to a distribution of impacts of splash particles in the build plane, i.e. on the powder bed. The detection of splash particles therefore, allows for deriving information on the process and object quality and further allows for a control of at least one process parameter during the manufacturing process.

By way of the invention it is possible to monitor the generation of splash particles and/or to control the process parameter "online", e.g. while the manufacturing process is being performed. Thus, the energy depleted in the build material by irradiation with the energy beam can be related to whether splash particles are being generated. Further, the depleted energy can be controlled, in particular reduced, when splash particles are detected. This allows for a control of process parameters, in particular the energy depleted in the build material, wherein it can be assured that the energy is chosen high enough to properly consolidate the build material but not too high as to lead to a partial evaporation of the build material.

According to a first embodiment of the apparatus, the detection device is configured to detect and/or determine a spray characteristic of the splash particles generated in the consolidation zone. The spray characteristic of the splash particles indicates whether the build material is properly consolidated or whether a part of the build material has been evaporated leading to an imperfect consolidation of the build material in the consolidation zone. Based on the spray characteristic of the splash particles it is possible to obtain information on process quality, since in processes with excessive spray of splash particles the build material is not properly consolidated leading to imperfections and/or deviations in the object to be built. Thus, it is possible to control specific process parameters, in particular the energy depleted in the build material, to ensure that a defined process quality is met.

The apparatus has been further improved in that the detection device is configured to detect the amount and/or the size and/or the speed of the splash particles and/or an impact of a splash particle on a build plane and/or a pattern of impacts of splash particles on the build plane. The term "build plane" in the scope of this application refers to the plane in which the build material can be irradiated via the energy beam. The detection of the speed of the splash particles allows for a determination of the amount of the individual splash particles, since the speed of the splash particles is correlated with the mass of the individual splash particles. For example, lighter splash particles typically move faster than heavier splash particles. Thus, the amount of build material contained in a splash particle can be determined via the mass of the splash particle by detecting the speed of the splash particle. Upon the detection of the amount and/or the size and/or the speed of the splash particles and/or an impact of a splash particle on a build plane and/or a pattern of impacts of splash particles on the build plane information can be obtained whether the manufacturing process of the three-dimensional object is performed under suitable process parameters. Hence, the amount of build material that is evaporated upon irradiation with the energy beam can be reduced, in particular minimized, to prevent the generation of splash particles that on the one hand have a negative impact on the structural integrity of the object to be built and further contaminate the powder bed in regions adjacent to the consolidation zone, wherein the splash particles land and create defects in the plane surface of the build material, e.g. craters in the build material or the splash particles land on the object being built leading to defects in the object compromising object quality.

Further, the detection device can be configured to determine a degree of evaporation of build material in the consolidation zone. Thus, the detection device allows for a determination to what degree or extent the build material is being evaporated in the consolidation zone. Upon the determination of the degree of evaporation a control of corresponding process parameters is possible to ensure that the build material is properly consolidated instead of being evaporated.

The detection device may further be configured to determine the degree of evaporation via at least one algorithm, in particular an image analysis algorithm. Thus, the detection device enables an image detection of the build plane, i.e. the consolidation zone, wherein the degree of evaporation is evaluated or determined via at least one algorithm. Using for example an image analysis algorithm it is possible to quantify or characterize the splash pattern and/or the spray characteristic of the splashes generated upon irradiation with the energy beam. This allows for an optimized control and/or regulation of various process parameters contributing to the energy depleted in the build material as the effect in adjusting such process parameters can instantly be determined or monitored via the detection device.

The apparatus can further be improved in that a control unit is provided that is configured to control at least one process parameter, preferably a parameter of the energy beam, in particular an energy beam power and/or an energy beam intensity and/or the spot size and/or the scanning speed, dependent on at least one detected splash particle and/or a detected impact of a splash particle on a build plane and/or a pattern of impacts of splash particles on the build plane and/or the determined degree of evaporation. The described embodiment allows for an "online-"monitoring and control of process parameters with respect to the energy depleted in the build material, in particular in the consolidation zone. For example, if a splash pattern is detected indicating that too much energy is depleted in the consolidation zone, relevant process parameters can be adjusted accordingly to reduce the energy depleted in the consolidation zone so as to avoid that build material is evaporated. To reduce the energy depleted in the build material it is, inter alia, possible to vary the writing speed (scanning speed), i.e. the speed the energy beam is guided over the build material, and/or to vary the size of the spot of the energy beam on the build material. It is also possible to define a threshold of detected splash particles, e.g. in number and/or size, wherein a process parameter is controlled, if the threshold is met. Thus, negative impacts on process quality can be avoided or reduced.

Additionally, the control unit of the apparatus can be configured to control at least one process parameter dependent on at least one ambient parameter in the process chamber. The ambient parameter for example is or comprises a stream of gas, in particular process gas and/or oxygen, a temperature, in particular of the process region and/or the consolidation zone. Hence, ambient parameters that additionally affect the manufacturing process can be taken into account so that the control of the process parameter leads to an enhanced process quality.

According to the invention, the detection device is or comprises at least one optical measuring device, in particular an optical sensor, for example a CMOS or CCD-sensor. Using the optical measuring device, images can be captured of the consolidation zone allowing for an evaluation, for example via an image analysis algorithm. Of course, the optical measuring device comprises suitable optical elements, such as lenses, to image the consolidation zone, in particular a generated splash pattern or generated splash particles onto the optical sensor.

According to another embodiment of the apparatus, a display unit is provided that is configured to display a detected splash particle and/or a detected impact of a splash particle on a build plane and/or a pattern of impacts of splash particles on the build plane and/or a determined degree of evaporation to a user. Thus, the information generated by the detection device can be directly displayed to the user, wherein the information can for example be further processed or used to adjust the manufacturing process. The user therefore, is informed by the display unit, wherein it is possible to use the display unit to indicate whether or not the process and/or object quality is met. Of course, the information can be stored in a quality management system.

Further, the detection device is may arranged off-axis with respect to a beam path of the energy beam. Hence, the detection device is not arranged in the beam path of the energy beam used to irradiate the build material in the consolidation zone. This allows for a continuous operation of the manufacturing process as the consolidation of build material can be monitored "online", i.e. during the operation of the manufacturing process without the need to arrange the detection device in the beam path of the energy beam. Thus, the detection device is configured to detect splash particles as they are generated by the energy beam allowing for a direct feedback and a direct control of process parameters upon the generation of splash particles.

Further the invention relates to a method according to the appended claim 8 for operating at least one apparatus for additively manufacturing of three-dimensional objects by means of successive layerwise selective irradiation and consolidation of layers of a build material which can be consolidated by means of an energy beam, wherein splash particles generated by at least partially evaporating build material in a consolidation zone in which the energy beam irradiates the build material are detected.

All features, details and advantages described with respect to the apparatus are fully transferable to the method.

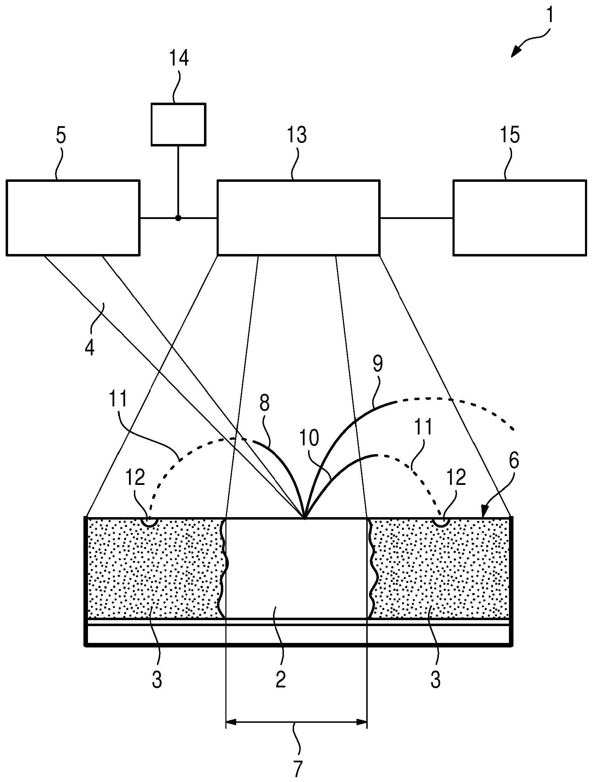

Exemplary embodiments of the invention are described with reference to the Fig. The sole Fig. is a schematic diagram showing a side view of an inventive apparatus.

The sole Fig. shows an apparatus 1 for additively manufacturing of three-dimensional objects 2 by means of successive layerwise selective irradiation and consolidation of layers of a build material 3 which can be consolidated by means of an energy beam 4. The energy beam 4 is generated by a beam generating unit 5, for example a laser beam source.

In this exemplary embodiment, the energy beam 4 is focused on a build plane 6 irradiating the build material 3 in a consolidation zone 7, wherein splash particles 8, 9 and 10 are generated, e.g. by at least partially evaporating the build material 3 in the consolidation zone 7. According to the depicted situation, the energy depleted in the build plane 6, in particular in the build material 3 located in the consolidation zone 7 of the build plane 6 that is irradiated with the energy beam 4, leads to an evaporation of a part of the build material 3. The respective partially evaporated build material 3 generates splash particles 8-10 that are moved outside the consolidation zone 7 onto the build plane 6 and thereby distributed in a process chamber of the apparatus 1. For example, the trajectories of the splash particles 8, 10 are depicted via dashed lines 11, wherein the splash particles 8, 10 create impacts 12, e.g. craters, when they impact on the surface of the build material 3 in the build plane 6 or the object 2 being built.

The apparatus 1 comprises a detection device 13 that is configured to detect the splash particles 8 - 10 generated in the manufacturing process, e.g. by the evaporation of the build material 3 in the consolidation zone 7. In particular, the detection device 13 is configured to monitor the entire build plane 6 as the energy beam 4 is configured to irradiate the build material 3 throughout the entire build plane 6.

The apparatus 1 further comprises a control unit 14 that is configured to control various process parameters of the manufacturing process of the three-dimensional objects 2, in particular it is possible to control the beam generating unit 5, particularly the energy beam intensity or the energy beam power of the generated energy beam 4. Futher parameters of the energy beam 4, such as a spot size of the energy beam 4 or a writing speed of the energy beam 4 may be varied as well, in particular to change the energy that is depleted in the build material 3 via the energy beam 4.

Upon a detection of splash particles 8 - 10 or the splash pattern the entirety of impacts 12 form on the surface of the build material 3 in the build plane 6 via the detection device 13 the corresponding process parameters can be adjusted via the control unit 14, wherein the energy depleted in the build material 3 can be regulated, particularly reduced, to reduce the degree of evaporation of the build material 3 so that the generation of splash particles 8 - 10 is avoided or reduced.

To detect the splash particles 8 - 10 the detection device 13 comprises an optical measuring device (not shown), wherein an image analysis algorithm is used to detect the generated splash particles 8 - 10. Thus, a spray characteristic of the splash particles 8-10 can be determined and/or detected in the consolidation zone 7. The splash particles 8-10 may be detected under a predefined angle to the build plane 6, e.g. in top view or in side view or in an arbitrary angle in between.

It is further possible to detect the amount and the size and the speed of the splash particles 8 - 10, i.e. the amount of build material 3 that is moved from the consolidation zone 7 due to the partial evaporation of build material 3. Further, impacts 12 of the splash particles 8 - 10, in other words the craters, on the build plane 6 can be detected. The single impacts 12 of splash particles 8 - 10 on the build plane 6, or the splash pattern the impacts 12 form on the build plane 6 can also be detected via the detection device 13. Therefore, the detection device 13 can determine whether or not predefined process quality parameters are met or whether a contamination of the build plane 6 (due to impacts 12 in the surface of the build material 3) is present. The control unit 14 can be used to (semi-)automatically control the various process parameters, in particular the energy beam power of the energy beam intensity to avoid the generation of splash particles 8 - 10. It is additionally possible to determine a position of an impact 12 on the build plane 6, in particular a relative position of an impact 12 of a splash particle 8 - 10 relative to at least one other impact 12 or relative to a consolidation zone 7.

The sole Fig. further depicts that the apparatus 1 comprises a display unit 15 that is configured to display the detected splash particles 8-10 and the detected impacts 12 of splash particles 8 - 10, in particular the craters on the build plane 6 and the splash pattern of the impacts 12 of the splash particles 8-10 and the determined degree of evaporation to a user. For example, a value relating to an amount and/or a size of generated splash particles 8-10 can be displayed, as well as the specific part of the consolidation zone 7 in which the splash particles 8 - 10 are generated. Therefore, it is possible that alternatively or additionally the user can adjust various process parameters or can verify whether the process parameters set by the control unit 14 are suitable to ensure that a predefined process quality is met.

## Claims

1. Apparatus (1) for additively manufacturing of three-dimensional objects (2) by means of successive layerwise selective irradiation and consolidation of layers of a build material (3) which can be consolidated by means of an energy beam (4), comprising a detection device (13) configured to detect splash particles (8 - 10) generated by at least partially evaporating build material (3) in a consolidation zone (7) in which the energy beam (4) irradiates the build material (3), wherein the detection device (13) is arranged off-axis with respect to a beam path of the energy beam (4) and wherein the detection device is configured to detect and/or determine a spray characteristic of the splash particles (8 - 10) generated in the consolidation zone (7), wherein the detection device (13) is or comprises at least one optical measuring device, in particular an optical sensor, wherein the detection device (13) is configured to detect the size and/or an amount and/or a speed of the splash particles (8 - 10) and/or an impact (12) of a splash particle on a build plane (6) and/or a pattern of impacts (12) of splash particles (8 - 10) on the build plane (6), **characterized in that** the detection device (13) is adapted to directly control process parameters upon the generation of splash particles (8 - 10).

2. Apparatus according to claim 1, **characterized in that** the detection device (13) is configured to determine a degree of evaporation of build material (3) in the consolidation zone (7).

3. Apparatus according to claim 2, **characterized in that** the detection device (13) is configured to determine the degree of evaporation via at least one algorithm, in particular an image analysis algorithm.

4. Apparatus according to one of the preceding claims, **characterized in that** a control unit (14) is configured to control at least one process parameter, preferably a parameter of the energy beam (4), in particular an energy beam power and/or an energy beam intensity, dependent on at least one detected splash particle (8-10) and/or a detected impact (12) of a splash particle (8-10) on a build plane (6) and/or a pattern of impacts (12) of splash particles (8 - 10) on the build plane (6) and/or the determined degree of evaporation.

5. Apparatus according to claim 4, **characterized in that** the control unit (14) is configured to control the process parameter dependent on at least one ambient parameter.

6. Apparatus according to claim 5, **characterized in that** the ambient parameter is or comprises a stream of gas, in particular process gas and/or oxygen, a temperature, in particular of the process region and/or the ambience and/or the consolidation zone (7).

7. Apparatus according to one of the preceding claims, **characterized by** a display unit (15) configured to display a detected splash particle (8-10) and/or a detected impact (12) of a splash particle on a build plane (6) and/or a pattern of impacts (12) of splash particles (8 - 10) on the build plane (6) and/or a determined degree of evaporation to a user.

8. Method for operating at least one apparatus (1) according to one of the preceding claims for additively manufacturing of three-dimensional objects (2) by means of successive layerwise selective irradiation and consolidation of layers of a build material (3) which can be consolidated by means of an energy beam (4), **characterized in that** splash particles (8 - 10) generated by at least partially evaporating build material (3) in a consolidation zone (7) in which the energy beam (4) irradiates the build material (3) are detected, wherein the size and/or an amount and/or a speed of the splash particles (8 - 10) and/or an impact (12) of a splash particle on a build plane (6) and/or a pattern of impacts (12) of splash particles (8 - 10) on the build plane (6) is detected by the detection device (13), wherein process parameters are directly controlled upon the generation of splash particles (8 - 10).

## Patentansprüche

1. Vorrichtung (1) zur generativen Herstellung dreidimensionaler Objekte (2) mittels aufeinanderfolgender schichtweiser selektiver Bestrahlung und Verfestigung von Schichten eines Baumaterials (3), das mittels eines Energiestrahls (4) verfestigt werden kann, aufweisend eine Detektionsvorrichtung (13), die konfiguriert ist, Spritzpartikel (8-10) zu detektieren, die durch zumindest teilweises Verdampfen von Baumaterial (3) in einer Verfestigungszone (7) erzeugt werden, in welcher der Energiestrahl (4) das Baumaterial (3) bestrahlt, wobei die Detektionsvorrichtung (13) außeraxial zu einem Strahlengang des Energiestrahls (4) angeordnet ist und wobei die Detektionsvorrichtung konfiguriert ist, eine Sprüheigenschaft der in der Verfestigungszone (7) erzeugten Spritzpartikel (8-10) zu detektieren und/oder zu bestimmen, wobei die Detektionsvorrichtung (13) mindestens eine optische Messvorrichtung, insbesondere ein optischer Sensor, ist oder diese(n) aufweist, wobei die Detektionsvorrichtung (13) konfiguriert ist, die Größe und/oder eine Menge und/oder eine Geschwindigkeit der Spritzpartikel (8-10) und/oder einen Aufprall (12) eines Spritzpartikels auf eine Bauebene (6) und/oder ein Muster von Aufprallen (12) von Spritzpartikeln (8-10) auf die Bauebene (6) zu detektieren, **dadurch gekennzeichnet, dass** die Detektionsvorrichtung (13) ausgelegt ist, Prozessparameter bei der Erzeugung von Spritzpartikeln (8-10) direkt zu steuern.

2. Vorrichtung nach Anspruch 1, **dadurch gekennzeichnet, dass** die Detektionsvorrichtung (13) konfiguriert ist, einen Verdampfungsgrad von Baumaterial (3) in der Verfestigungszone (7) zu bestimmen.

3. Vorrichtung nach Anspruch 2, **dadurch gekennzeichnet, dass** die Detektionsvorrichtung (13) konfiguriert ist, den Verdampfungsgrad über mindestens einen Algorithmus, insbesondere einen Bildanalysealgorithmus, zu bestimmen.

4. Vorrichtung nach einem der vorhergehenden Ansprüche, **dadurch gekennzeichnet, dass** eine Steuereinheit (14) konfiguriert ist, mindestens einen Prozessparameter, vorzugsweise einen Parameter des Energiestrahls (4), insbesondere eine Energiestrahl-Leistung und/oder eine Energiestrahl-Intensität, in Abhängigkeit von mindestens einem detektierten Spritzpartikel (8-10) und/oder einem detektierten Aufprall (12) eines Spritzpartikels (8-10) auf eine Bauebene (6) und/oder einem Muster von Aufprallen (12) von Spritzpartikeln (8-10) auf die Bauebene (6) und/oder dem bestimmten Verdampfungsgrad zu steuern.

5. Vorrichtung nach Anspruch 4, **dadurch gekennzeichnet, dass** die Steuereinheit (14) konfiguriert ist, den Prozessparameter in Abhängigkeit von mindestens einem Umgebungsparameter zu steuern.

6. Vorrichtung nach Anspruch 5, **dadurch gekennzeichnet, dass** der Umgebungsparameter ein Strom von Gas, insbesondere ein Prozessgas und/oder Sauerstoff, eine Temperatur, insbesondere des Prozessbereichs und/oder der Umgebung und/oder der Verfestigungszone (7), ist oder diesen aufweist.

7. Vorrichtung nach einem der vorhergehenden Ansprüche, **gekennzeichnet durch** eine Anzeigeeinheit (15), die konfiguriert ist, ein detektiertes Spritzpartikel (8-10) und/oder einen detektierten Aufprall (12) eines Spritzpartikels auf eine Bauebene (6) und/oder ein Muster von Aufprallen (12) von Spritzpartikeln (8-10) auf die Bauebene (6) und/oder einen bestimmten Verdampfungsgrad für einen Nutzer anzuzeigen.

8. Verfahren zum Betreiben mindestens einer Vorrichtung (1) nach einem der vorhergehenden Ansprüche zur generativen Herstellung dreidimensionaler Objekte (2) mittels aufeinanderfolgender schichtweiser selektiver Bestrahlung und Verfestigung von Schichten eines Baumaterials (3), das mittels eines Energiestrahls (4) verfestigt werden kann, **dadurch gekennzeichnet, dass** Spritzpartikel (8-10), die durch zumindest teilweises Verdampfen von Baumaterial (3) in einer Verfestigungszone (7) erzeugt werden, in dem der Energiestrahl (4) das Baumaterial (3) bestrahlt, detektiert werden, wobei die Größe und/oder eine Menge und/oder eine Geschwindigkeit der Spritzpartikel (8-10) und/oder ein Aufprall (12) von Spritzpartikeln (8-10) auf die Bauebene (6) durch die Detektionseinrichtung (13) detektiert wird, wobei Prozessparameter bei der Erzeugung von Spritzpartikeln (8-10) direkt gesteuert werden.

## Revendications

1. Appareil (1) pour la fabrication additive d'objets tridimensionnels (2) au moyen d'une irradiation et d'une consolidation sélectives couche par couche successives de couches d'un matériau de construction (3) qui peut être consolidé au moyen d'un faisceau d'énergie (4), comprenant un dispositif de détection (13) configuré pour détecter des particules de projection (8-10) générées en évaporant au moins partiellement le matériau de construction (3) dans une zone de consolidation (7) dans laquelle le faisceau d'énergie (4) irradie le matériau de construction (3), dans lequel le dispositif de détection (13) est agencé hors axe par rapport à un trajet de faisceau du faisceau d'énergie (4) et dans lequel le dispositif de détection est configuré pour détecter et/ou déterminer une caractéristique de pulvérisation des particules de projection (8-10) générées dans la zone de consolidation (7), dans lequel le dispositif de détection (13) est ou comprend au moins un dispositif de mesure optique, en particulier un capteur optique, dans lequel le dispositif de détection (13) est configuré pour détecter la taille et/ou une quantité et/ou une vitesse des particules de projection (8-10) et/ou un impact (12) d'une particule de projection sur un plan de construction (6) et/ou un motif d'impacts (12) de particules de projection (8-10) sur le plan de construction (6), **caractérisé en ce que** le dispositif de détection (13) est conçu pour commander directement des paramètres de traitement lors de la génération de particules de projection (8-10).

2. Appareil selon la revendication 1, **caractérisé en ce que** le dispositif de détection (13) est configuré pour déterminer un degré d'évaporation de matériau de construction (3) dans la zone de consolidation (7).

3. Appareil selon la revendication 2, **caractérisé en ce que** le dispositif de détection (13) est configuré pour déterminer le degré d'évaporation via au moins un algorithme, en particulier un algorithme d'analyse d'image.

4. Appareil selon l'une des revendications précédentes, **caractérisé en ce qu'**une unité de commande (14) est configurée pour commander au moins un paramètre de traitement, de préférence un paramètre du faisceau d'énergie (4), en particulier une puissance de faisceau d'énergie et/ou une intensité de faisceau d'énergie, en fonction d'au moins une particule de projection détectée (8-10) et/ou d'un impact détecté (12) d'une particule de projection (8-10) sur un plan de construction (6) et/ou d'un motif d'impacts (12) de particules de projection (8-10) sur le plan de construction (6) et/ou du degré d'évaporation déterminé.

5. Appareil selon la revendication 4, **caractérisé en ce que** l'unité de commande (14) est configurée pour commander le paramètre de traitement en fonction d'au moins un paramètre ambiant.

6. Appareil selon la revendication 5, **caractérisé en ce que** le paramètre ambiant est ou comprend un flux de gaz, en particulier un gaz de traitement et/ou de l'oxygène, une température, en particulier de la région de traitement et/ou de l'ambiance et/ou de la zone de consolidation (7).

7. Appareil selon l'une des revendications précédentes, **caractérisé par** une unité d'affichage (15) configurée pour afficher une particule de projection détectée (8-10) et/ou un impact détecté (12) d'une particule de projection sur un plan de construction (6) et/ou un motif d'impacts (12) de particules de projection (8-10) sur le plan de construction (6) et/ou un degré d'évaporation déterminé à destination d'un utilisateur.

8. Procédé d'opération d'au moins un appareil (1) selon l'une des revendications précédentes pour la fabrication additive d'objets tridimensionnels (2) au moyen d'une irradiation et d'une consolidation sélectives couche par couche successives de couches d'un matériau de construction (3) qui peut être consolidé au moyen d'un faisceau d'énergie (4), **caractérisé en ce que** les particules de projection (8-10) générées en évaporant au moins partiellement un matériau de construction (3) dans une zone de consolidation (7) dans laquelle le faisceau d'énergie (4) irradie le matériau de construction (3) sont détectées, dans lequel la taille et/ou une quantité et/ou une vitesse des particules de projection (8-10) et/ou un impact (12) de particules de projection (8-10) sur le plan de construction (6) est/sont détecté(e)(s) par le dispositif de détection (13), dans lequel des paramètres de traitement sont directement commandés lors de la génération de particules de projection (8-10).
